# EUROPEAN PATENT APPLICATION

(11) **EP 3 296 881 A1**
(43) Date of publication of application: **21.03.2018**
(21) Application number: 16792733.4
(22) Date of filing: 12.05.2016
(51) Int. Cl.: G06F 13/00, H04M 11/08

(54) **NOTIFICATION CONTROL SYSTEM, SERVER DEVICE, COMMUNICATION TERMINAL DEVICE, PROGRAM, AND NOTIFICATION CONTROL METHOD**

(30) Priority: 13.05.2015 JP 2015098335
(71) Applicant: NTT DOCOMO, INC., Chiyoda-ku Tokyo 100-6150 (JP)
(72) Inventor: KURISU, Toshiharu, Tokyo 100-6150 (JP); SASAKI, Maki, Tokyo 153-0042 (JP)
(74) Representative: Hoffmann Eitle
(86) International application number: PCT/JP2016/064077
(87) International publication number: WO 2016/182008

(57) **Abstract**

Communication terminal apparatus 20, upon accepting a spoken instruction from a user (S1), performs positioning processing to generate position data indicating a position of the user (S2), and transmits the position data and audio data indicating the spoken instruction to server apparatus 10 (S3). Server apparatus 10 discriminates a situation in which the user who is in possession of communication terminal apparatus 20 is placed, based on acquired data, and notifies content that satisfies a predetermined notification condition to the user of communication terminal apparatus 20 (S4 to S7). Server apparatus 10, in the case where it is discriminated that the user is in a non-daily sphere, relaxes the notification condition to be more relaxed than in the case where the user is in a daily sphere. Server apparatus 10, in the case where the required time necessary to have a meal is associated with content that includes information on eateries, raises the upper limit of the required time when relaxing the notification condition.

## Description

### Technical Field

The present invention relates to a technology for notifying content to a user.

### Background Art

There are voice agent systems in which a user of a communication terminal apparatus gives an instruction by voice (hereinafter, "spoken instruction") and the communication terminal apparatus notifies content to the user in accordance with the spoken instruction. In Non-Patent Document 1, a case in which the user tells a smartphone to "find a taxi in this area" and the smartphone displays information on taxi companies that are able to call a taxi to the current location of the user is described as an exemplary operation of a voice agent system.

### Citation List

### Non-Patent Documents

Non-Patent Document 1: Guide to taxi company search function affiliates, [online], [viewed on April 6, 2015], Internet <URL: http://www.taxisite.com/pr/cal/>

### Summary of Invention

### Technical Problem

In a typical voice agent system, if the situation of a user (e.g., location of user or date/time) when he or she gives the spoken instruction is the same, the same content will be notified, irrespective of who the user that gave the spoken instruction is. However, with this system, content that is useful for each of a plurality of users is not necessarily notified. For example, a user who gave a spoken instruction for finding information on eateries at a certain location may want information on eateries where it is possible to have a casual meal in the case where the location is near his or her home, and may want information on eateries of a kind that he or she would not normally frequent where it is possible to have a lavish meal in the case where the location is a travel destination.

In view of this, an object of the present invention is to differentiate the condition of content to be notified according to the situation in which the user is placed.

### Solution to Problem

In order to solve the abovementioned object, a notification control system of the present invention is provided with a discrimination unit that discriminates a situation in which a user is placed, and a notification control unit that notifies content satisfying a predetermined condition to the user, the notification control unit differentiating the condition between a case where it is discriminated that the user is placed in a specific situation and a case where the user is placed in another situation.

In the notification control system of the present invention, the notification control unit, in the case where it is discriminated that the user is placed in the specific situation, may relax or restrict the condition to be more relaxed or restricted than in the case where the user is placed in the other situation.

In the notification control system of the present invention, the discrimination unit may discriminate the situation, based on at least one of a position of the user and a date/time.

In this notification control system, the discrimination unit may discriminate whether the position of the user belongs to a daily sphere or a non-daily sphere.

In the notification control system of the present invention, the condition may include a condition of a parameter associated with content, and the notification control unit may differentiate the condition of the parameter between the case where it is discriminated that the user is placed in the specific situation and the case where the user is placed in the other situation.

In this notification control system, the parameter may include at least one of time, cost, position, calories, evaluation, and genre.

In this notification control system, the condition may differ according to a type of content.

Furthermore, the notification control unit may apply, to content of a specific type, a same condition in the case where it is discriminated that the user is placed in the specific situation and the case where the user is placed in the other situation.

A server apparatus of the present invention is provided with a discrimination unit that discriminates a situation in which a user of a communication terminal apparatus is placed, and a notification control unit that notifies content satisfying a predetermined condition to the user of the communication terminal apparatus, the notification control unit differentiating the condition between a case where it is discriminated that the user is placed in a specific situation and a case where the user is placed in another situation.

A communication terminal apparatus of the present invention is provided with a transmission unit that transmits data indicating a situation in which a user of an own communication terminal apparatus is placed to a server apparatus, an acquisition unit that acquires notification data, transmitted by the server apparatus in response to the transmitted data, that notifies content satisfying a predetermined condition, the condition differing between a case where it is discriminated that the user is placed in a specific situation and a case where the user is placed in another situation, and a notification unit that notifies the content to the user, based on the acquired notification data.

A computer program of the present invention causes a computer of a communication terminal apparatus to execute the steps of transmitting data indicating a situation in which a user of the communication terminal apparatus is placed to a server apparatus, acquiring notification data, transmitted by the server apparatus in response to the transmitted data, that notifies content satisfying a predetermined condition, the condition differing between a case where it is discriminated that the user is placed in a specific situation and a case where the user is placed in another situation, and notifying the content to the user, based on the acquired notification data.

A notification control method of the present invention includes the steps of discriminating a situation in which a user is placed, and notifying content that satisfies a predetermined condition to the user, the condition being differentiated between a case where it is discriminated that the user is placed in a specific situation and a case where the user is placed in another situation.

### Effects of Invention

According to the present invention, the condition of content to be notified can be differentiated according to the situation in which the user is placed.

### Brief Description of the Drawings

FIG. 1 is a diagram showing the overall configuration of a notification control system according to a first embodiment of the present invention.
FIG. 2 is a block diagram showing a hardware configuration of a server apparatus according to the embodiment.
FIG. 3 is a block diagram showing a hardware configuration of a communication terminal apparatus according to the embodiment.
FIG. 4 is a block diagram showing functional configurations of the server apparatus and the communication terminal apparatus according to the embodiment.
FIG. 5 is a flowchart showing processing that is executed by the server apparatus and the communication terminal apparatus according to the embodiment.
FIG. 6 is an explanatory diagram of the applicability of notification conditions for every type of content according to the embodiment.
FIG. 7 is an explanatory diagram of relaxation and restriction of the notification condition of content according to the embodiment.

### Description of Embodiments

Hereinafter, embodiments of the present invention will be described with reference to the drawings.

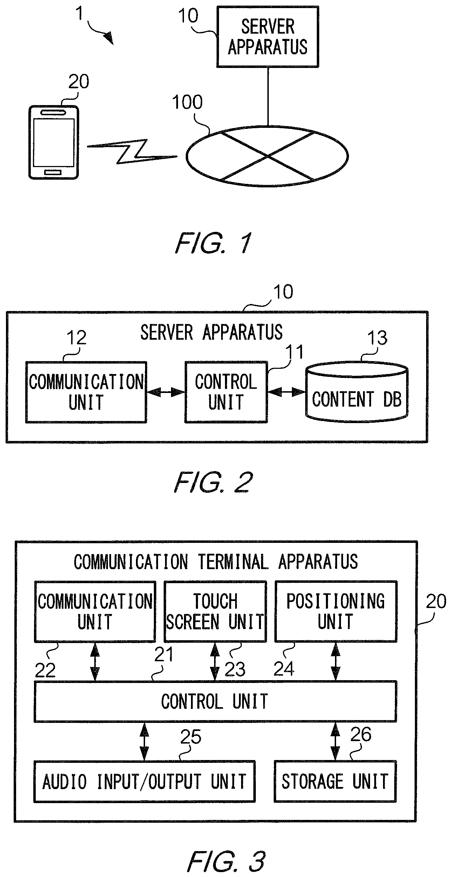

FIG. 1 is a diagram showing the overall configuration of notification control system 1 according to one embodiment of the present invention. Notification control system 1 is a system that controls the notification of content to a user. As shown in FIG. 1, notification control system 1 is provided with server apparatus 10 and communication terminal apparatus 20. Server apparatus 10 and communication terminal apparatus 20 have a function for connecting to network 100. Network 100 is a communication network that includes a mobile communication network, an exchange, a base station and the like, and is managed and operated by a predetermined communication operator.

Note that although only one communication terminal apparatus 20 is shown in FIG. 1, there are in fact two or more communication terminal apparatuses.

Server apparatus 10 provides a service of notifying content to communication terminal apparatus 20. Communication terminal apparatus 20 notifies content to a user, based on the control of server apparatus 10. Communication terminal apparatus 20 is a portable communication terminal apparatus that is in the possession of the user (that the user carries with him or her), and in this embodiment is a smartphone. Communication terminal apparatus 20 is not limited to a smartphone, and may be a feature phone, a tablet computer, a laptop computer, or various types of wearable communication terminal apparatus (e.g., head mounted display and wristband communication terminal apparatus). Communication terminal apparatus 20 need not be portable, and may be a stationary communication device. Communication terminal apparatus 20 may also be an in-vehicle apparatus such as a car navigation apparatus.

FIG. 2 is a diagram showing a hardware configuration of server apparatus 10. As shown in FIG. 2, server apparatus 10 is provided with control unit 11, communication unit 12, and content DB (database) 13.

Control unit 11 is a processor provided with a CPU serving as an arithmetic processing unit and memories including a ROM (Read Only Memory) and a RAM (Random Access Memory). The CPU controls each unit of server apparatus 10, by reading out a computer program stored in the ROM to the RAM and executing the program. Communication unit 12 is an interface that connects to network 100 and deals with external apparatuses.

Content DB 13 is the database storing data that notifies content (hereinafter, "notification data"). Notification data is, for example, data associated with content. This notification data includes, for example, explanatory notes describing the content and information on a URI (Uniform Resource Identifier) indicating the location where the content is stored. The content in this case is web pages, for example. As specific content, there is content that includes information on eateries, events or sightseeing spots, content that includes information on recommended products for the user, and content that includes information on transfer guidance or route guidance for means of transportation. Although the content of the present embodiment includes content that the user can see (visual content), the present invention is not limited thereto, and the content may, for example, be content that the user can hear (audible content). Also, the notification data of content may be the content itself.

Although, in the present embodiment, server apparatus 10 is provided with content DB 13, a configuration may be adopted in which server apparatus 10 accesses content DB 13 serving as an external apparatus.

FIG. 3 is a diagram showing the hardware configuration of communication terminal apparatus 20. As shown in FIG. 3, communication terminal apparatus 20 is provided with control unit 21, communication unit 22, touch screen unit 23, positioning unit 24, audio input/output unit 25, and storage unit 26.

Control unit 21 is a processor provided with a CPU serving as an arithmetic processing unit and memories including a ROM and a RAM. The CPU controls each unit of communication terminal apparatus 20, by reading out a computer program stored in the ROM or storage unit 26 to the RAM and executing the read program.

Communication unit 22 has a wireless-communication circuit and an antenna, for example, and connects to network 100 and communicates with external apparatuses.

Touch screen unit 23 is provided with a display unit and a touch sensor. The display unit is a liquid crystal display, for example, and displays various types of images including display content. The touch sensor is a sensor provided in a planar form to overlap with a display area of the display unit, and detects operations of a user performed on the display area, in accordance with a prescribed method (e.g., resistive membrane method or capacitive sensing method).

Positioning unit 24 is provided with an antenna that receives a signal from the Global Navigation Satellite System (GNSS) and a processing circuit that processes the received signal, and performs positioning processing for measuring the position (current position) of positioning unit 24 (i.e., position of the user of communication terminal apparatus 20). Generally, positioning by GNSS is commonly used as GPS (Global Positioning System) positioning.

Note that positioning unit 24 may perform positioning processing using another positioning method such as base station positioning.

Audio input/output unit 25 has a microphone and a speaker, for example, and performs input and output of audio in communication terminal apparatus 20. Audio input/output unit 25 performs processing such as, for example, outputting audio from the speaker, based on an audio signal supplied from control unit 21, and converting audio input via the microphone into an audio signal and supplying the audio signal to control unit 21.

Storage unit 26 is a storage device such as an EEPROM (Electronically Erasable and Programmable ROM) or a flash memory, and stores various types of computer programs that are executed by control unit 21. As one of these computer programs, there is an application program (hereinafter, "notification application") for notifying content to a user.

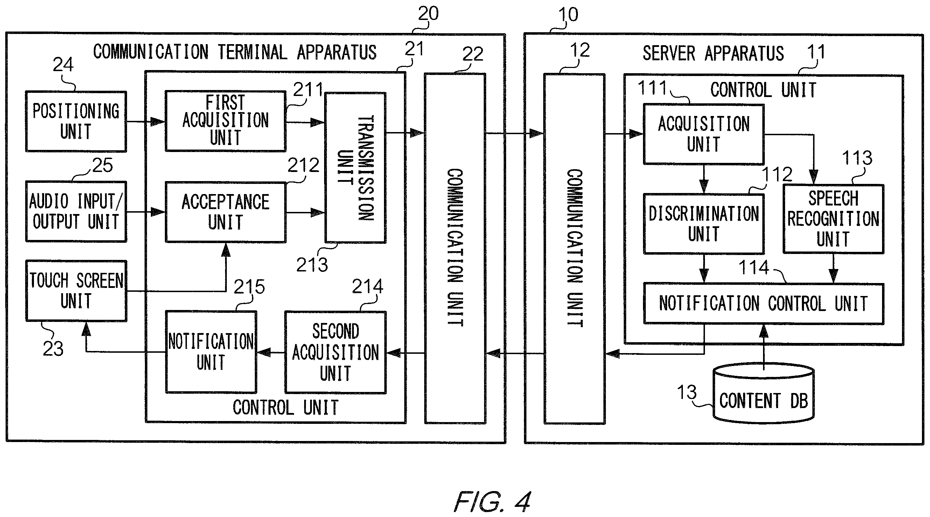

FIG. 4 is a block diagram showing the functional configurations of server apparatus 10 and communication terminal apparatus 20.

Control unit 11 of server apparatus 10 realizes functions corresponding to acquisition unit 111, discrimination unit 112, speech recognition unit 113 and notification control unit 114, by executing a computer program. Control unit 21 of communication terminal apparatus 20 realizes functions corresponding to first acquisition unit 211, acceptance unit 212, transmission unit 213, second acquisition unit 214 and notification unit 215, by executing the notification application.

In communication terminal apparatus 20, first acquisition unit 211 acquires the data indicating the situation in which the user is placed. As this data, there is position data indicating the position of the user measured by positioning unit 24.

Acceptance unit 212 accepts instructions to execute processing from the user, via audio input/output unit 25 or touch screen unit 23. Acceptance unit 212 accepts spoken instructions via audio input/output unit 25. Acceptance unit 212 accepts instructions by input of characters or selection of operators, via touch screen unit 23. Instructions that are accepted by acceptance unit 212 are instructions for requesting server apparatus 10 to notify content.

Transmission unit 213 transmits data acquired by first acquisition unit 211 and data indicating instructions accepted by acceptance unit 212 to server apparatus 10 via communication unit 22.

In server apparatus 10, acquisition unit 111 acquires the data transmitted by transmission unit 213, via communication unit 12.

Discrimination unit 112 discriminates the situation in which the user of communication terminal apparatus 20 is placed. Discrimination unit 112, here, discriminates whether the position of the user belongs to a daily sphere or a non-daily sphere of the user, based on the position data acquired by acquisition unit 111. The daily sphere includes regions such as the user's place of residence or place of commute (e.g., office), for example, and is set based on the region in which the user is active on a daily basis. The non-daily sphere includes regions other than the daily sphere, and is set to regions other than the region in which the user is active on a daily basis. Discrimination unit 112 may also otherwise discriminate the situation in which the user is placed based on the current date/time (date or time). For example, the discrimination unit 112 discriminates whether it is currently a specific day such as the user's birthday.

Speech recognition unit 113 recognizes speech that is represented by audio data acquired by acquisition unit 111 using a well-known speech recognition technology, and generates text data indicating the recognized speech.

Note that in the case where acceptance unit 212 accepts an instruction via touch screen unit 23, speech recognition of the speech recognition unit 113 is not required.

Notification control unit 114 performs control for notifying content that satisfies a predetermined condition to the user of communication terminal apparatus 20, based on content DB 13. The condition is a condition for notifying content to the user of communication terminal apparatus 20, and, hereinafter, is referred to as a "notification condition". Notification control unit 114 specifies content that depends on the instruction by the user, based on data indicating the instruction accepted by acceptance unit 212 acquired by acquisition unit 111. In the case where a spoken instruction is given, notification control unit 114 specifies the content based on the text data generated by speech recognition unit 113.

Notification control unit 114 differentiates the notification condition, between the case where it is discriminated that the user is placed in a specific situation and the case where the user is placed in another situation. "Differentiates the notification condition", in the following description, refers to relaxing or restricting the notification condition, in the case where it is discriminated that the user is placed in a specific situation, more than in the case where the user is placed in another situation. Relaxation of the notification condition refers to making the notification condition easier to satisfy, and restriction of the notification condition refers to making the notification condition more difficult to satisfy. The target of the content to be notified is widened by relaxation of the notification condition, and the target of the content to be notified is narrowed by restriction of the notification condition. The notification conditions, in the present embodiment, include the conditions of parameters associated with the content. These parameters can be conceived as parameters specifying search conditions in the case of searching for content targeted for notification. As specific parameters, there are, for example, time, cost, position, calorie intake, evaluation and genre that are associated with content.

Notification control unit 114, in the case of notifying content that satisfies the notification condition, transmits notification data that notifies the content to communication terminal apparatus 20 via communication unit 12.

In communication terminal apparatus 20, the second acquisition unit 214 acquires the notification data transmitted by notification control unit 114, via communication unit 22.

Notification unit 215 notifies the content to the user via touch screen unit 23, for example, based on the notification data acquired by the second acquisition unit 214.

Next, operations of the present embodiment will be described.

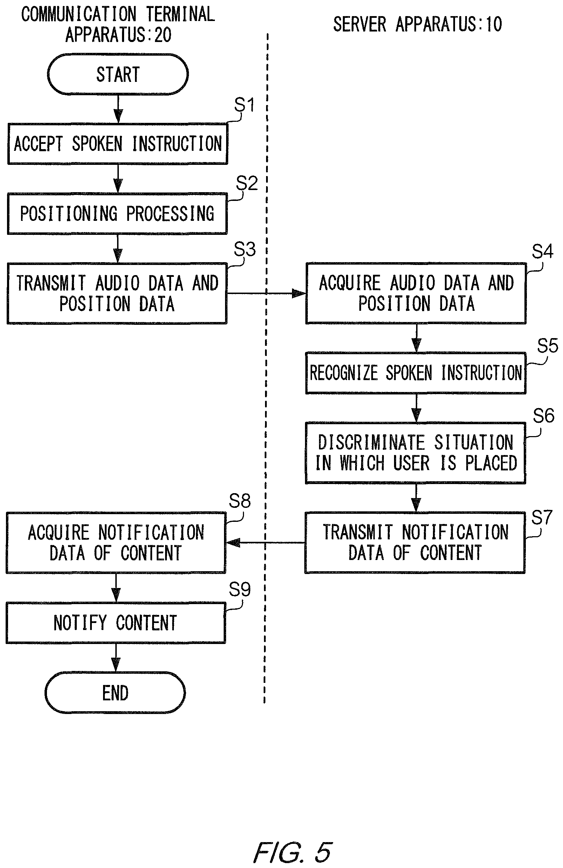

FIG. 5 is a flowchart showing processing relating to a notification service that is executed in notification control system 1. Hereinafter, operations in case where the notification condition is relaxed will be described.

First, control unit 21 of communication terminal apparatus 20, after executing (starting) the notification application, accepts a spoken instruction from the user, via audio input/output unit 25 (step S1). Here, control unit 21 generates audio data indicating audio input via audio input/output unit 25. Next, control unit 21 performs positioning processing for measuring the position of the user using positioning unit 24, and generates position data indicating the measured position (step S2). Next, control unit 21 transmits the audio data indicating audio whose input was accepted in step S1 and the position data generated in step S2 to server apparatus 10 via communication unit 22 (step S3).

Control unit 11 of server apparatus 10 acquires (receives) the audio data and the position data transmitted in step S3, via communication unit 12 (step S4). Next, control unit 11 recognizes the spoken instruction by the user of communication terminal apparatus 20, based on the audio data acquired in step S4 (step S5). Control unit 11, here, generates text data indicating the recognized speech.

Next, control unit 11 discriminates the situation in which the user of communication terminal apparatus 20 is placed (step S6). Control unit 11, here, discriminates whether the position of the user belongs to the daily sphere or the non-daily sphere of the user, based on the position data acquired in step S4. The daily sphere or the non-daily sphere is, for example, set in advance through input of a character string to communication terminal apparatus 20 or direct designation of an address by designation of a position on a map. The setting method of the daily sphere or the non-daily sphere is not limited thereto, and control unit 11 may acquire position data from communication terminal apparatus 20 periodically, and may set the region in which the user frequency resides as the daily sphere and set other regions as the non-daily sphere.

Next, control unit 11 transmits notification data of content that satisfies the notification condition to communication terminal apparatus 20 via communication unit 12 (step S7). Control unit 11 performs intention interpretation based on the text data generated in step S5, and specifies content to be notified with reference to content DB 13. Control unit 11 notifies the content based on a user attribute. The user attribute is, for example, a hobby or a preference of the user, but may otherwise include an attribute of the user such as the sex or age of the user. Content suitable for the user is thereby readily targeted for notification.

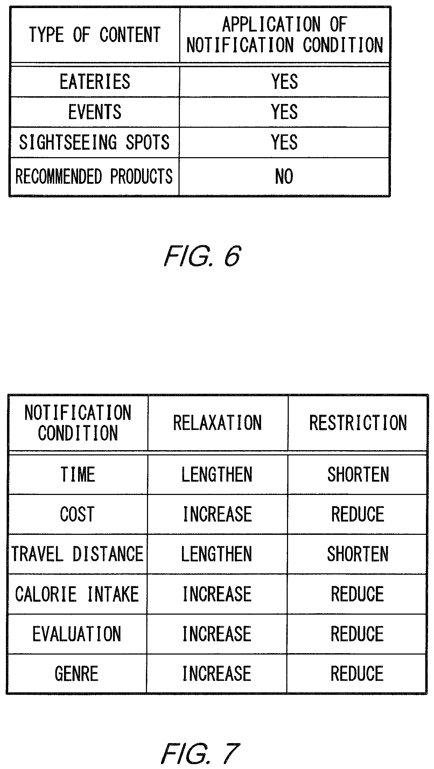

Furthermore, in step S7, control unit 11, in the case where it is discriminated that the user is placed in a specific situation, relaxes the notification condition to be more relaxed than in the case where the user is placed in another situation. Note that control unit 11 may differentiate the applicability of the notification condition according to the type of content. As shown in FIG. 6, control unit 11 relaxes the notification condition, in the case of notifying content that includes information on eateries, events or sightseeing spots. In contrast, control unit 11 does not relax the notification condition, in the case of notifying content including information on recommended products to the user. In this case, control unit 11 controls the notification of content, independently of the situation in which the user is placed. In other words, control unit 11 (notification control unit 114) applies, to content of specific types, the same notification condition in the case where it is discriminated that the user is placed in a specific situation and the case where the user is placed in another situation. The type of content to which the notification condition is applied is, for example, content that includes information particular to the region to which the position of the user belongs. As types of content to which the notification condition is not applied, content that does not include information particular to the region to which the position of the user belongs or does not relate mainly to information particular to the region, such as sales information on the latest issue of a publication that the user purchases is envisioned.

FIG. 7 is a diagram illustrating relaxation and restriction of the notification condition of content. A specific method of relaxation of the notification condition will be described with reference to FIG. 7. Hereinafter, the case where information on eateries is included in the content to be notified will be described.

Control unit 11, in the case where the notification condition shows the condition of time, takes content that satisfies the condition of time as the target for notification. Control unit 11 then raises the upper limit for time, for example, when relaxing the condition of time. Here, times associated with content are assumed to show estimates of the required time necessary to have a meal. The person who gave the spoken instruction may want to obtain information on eateries where it is possible to have a quick meal, in the case where the region thereof is near his or her place of residence, and may want to obtain information on eateries where it is possible to have a relaxed meal, in the case where the region thereof is a travel destination. In view of this, control unit 11 takes content that includes information on eateries whose required time is less than 1 hour as the target for notification, when not relaxing the condition of time, and takes content that includes information on eateries whose required time is less than 2 hour as the target for notification, when relaxing the condition of time.

As another condition of time, times associated with content may show the opening hours of eateries. In this case, control unit 11 takes the content of eateries that are currently within opening hours as the notification condition for notifying content, when the position of the user belongs to the daily sphere, and takes the content of eateries that are outside of opening hours, in addition to eateries that are currently within opening hours, as the notification condition for notifying content, when the position of the user belongs to the non-daily sphere.

Control unit 11, in the case where the notification condition shows the condition of cost, takes content that satisfies the condition of cost as the target for notification. Control unit 11 then raises the upper limit for cost, for example, when relaxing the condition of cost. Costs associated with content are assumed to show costs (e.g., budgets) necessary to have a meal. The user who is in the daily sphere may want to obtain information on eateries where it is possible to have a meal without too much expense, and the user who is in the non-daily sphere may want to obtain information on eateries where it is possible to have a more lavish meal than normal. In view of this, control unit 11 takes content that includes information on eateries whose cost is less than 3000 yen as the target for notification, when not relaxing the condition of cost, and takes content that includes information on eateries whose cost is less than 10,000 yen as the target for notification, when relaxing the condition of cost.

Control unit 11, in the case where the notification condition shows the condition of travel distance, takes content that satisfies the condition of travel distance as the target for notification. Control unit 11 then raises the upper limit for travel distance, for example, when relaxing the condition of travel distance. Travel distances associated with content show travel distances from the position of the user to eateries. For example, the user who is in the daily sphere may want to obtain information on eateries where it is possible to have a meal nearby, and the user who is in the non-daily sphere may want to obtain information on eateries that have a good reputation, even if the travel distance is slighter long in a region that he or she does not normally visit. In view of this, control unit 11 takes content that includes information on eateries whose travel distance is below 3 km as the target for notification, when not relaxing the condition of travel distance, and takes content that includes information on eateries whose travel distance is below 10 km as the target for notification, when relaxing the condition of travel distance.

Control unit 11, in the case where the notification condition shows the condition of calorie intake relating to a meal (e.g., estimation of calorie intake per serving), takes content that satisfies the condition of calorie intake as the target for notification. Control unit 11 then increases the calorie intake when relaxing the condition of calorie intake. For example, the user who is in the non-daily sphere may want to have a meal without worrying as much about calorie intake as when he or she is in the daily sphere. In view of this, control unit 11 takes content that includes information on eateries that provide meals of less than 800 kcal as the target for notification, when not relaxing the condition of calorie intake, and takes content that includes information on eateries that provide meals of less than 1500 kcal as the target for notification, when relaxing the condition of calorie intake.

Control unit 11, in the case where the notification condition shows the condition of evaluation of eatery, takes content that satisfies the condition of evaluation as the target for notification. Control unit 11 then raises the upper limit of evaluation, for example, when relaxing the condition of evaluation. For example, the user who is in the non-daily sphere may be more inclined to want to have a meal at a highly evaluated eatery than when he or she is in the daily sphere. In view of this, control unit 11, in the case where the evaluation of eateries is divided into a plurality of levels, takes content that includes information on eateries whose evaluation is less than a threshold value as the target for notification, when not relaxing the condition of evaluation, and also takes information on eateries whose evaluation is greater than or equal to the threshold value as the target for notification, when relaxing the condition of evaluation.

Control unit 11, in the case where the notification condition shows the condition of genre of eatery, takes content that satisfies the condition of genre as the target for notification. Control unit 11 then increases the genres of content targeted for notification, when relaxing the condition of genre. For example, the user who is in the daily sphere may want to have a meal of a genre that he or she likes, whereas the user who is in the non-daily sphere may want to have a meal of a genre that he or she does not normally have. In view of this, control unit 11 takes, as the target for notification, content that includes information on eateries that provide meals of genres that the user has set in advance, when not relaxing the condition of genre, and takes, as the target for notification, content that further includes information on eateries that provide meals of other genres, in addition to the genres set in advance, when relaxing the condition of genre.

Description of a specific method of relaxing the notification condition has been given above. Control unit 11 need also only perform control relating to relaxation of the notification condition with a similar method, in the case of notifying content that includes information other than on eateries, such as events, sightseeing spots and the like. For example, control unit 11 need only relax the notification condition, based on the presumption that the user who is in the non-daily sphere will be feeling more liberated than when he or she is in the daily sphere.

Returning to FIG. 5, control unit 21 of communication terminal apparatus 20, upon acquiring (receiving) notification data of content via communication unit 22 (step S8), notifies the content to the user via touch screen unit 23, based on this notification data (step S9). Description of FIG. 5 has been given above.

Control unit 11, in step S6, may discriminate the situation in which the user is placed based on date/time. In this case, control unit 11 relaxes the notification condition similarly to the case where it is discriminated that the position of the user belongs to the non-daily sphere, in the case where it is discriminated that the date/time is a specific day, and does not relax the notification condition, in the case where it is discriminated that the date/time is another day. The method of setting this specific day is not particularly limited, and a birthday or the like may be set by the user, or Christmas Day or the like may be set in the server.

Control unit 11 may perform control for restricting the notification condition. Control unit 11, in the case where the position of the user belongs to the daily sphere, restricts the notification condition compared with the case where the position of the user belongs to the non-daily sphere, for example. Also, control unit 11, at a specific date/time, may restrict the notification condition of content to be more restricted than at other dates/times. The specific method of restricting the notification condition can be described as the opposite control to relaxing the notification condition, as shown in FIG. 7.

Also, control unit 11 may perform both relaxation and restriction control of the notification condition.

Server apparatus 10 may perform notification of push-type content for notifying content without a user instruction, instead of or in addition to performing notification of pull-type content for notifying content according to a user instruction. In this case, communication terminal apparatus 20 transmits position data to server apparatus 10 repeatedly, at a predetermined interval, for example. Server apparatus 10 need only notify content based on the acquired position data.

Server apparatus 10, in the case where content is requested via touch screen unit 23, without using a spoken instruction, need only omit the processing of step S5 and notify content based on data (e.g., text data) acquired from communication terminal apparatus 20.

According to notification control system 1 of the embodiment described above, the notification condition of content differs according to the situation in which the user who instructed the request for content is placed. The content to be notified also thereby differs, depending on whether the position of the user belongs to the daily sphere or the non-daily sphere, for example. Also, in notification control system 1, the content to be notified may possibly differ, depending on whether the date/time is a specific date/time. According to notification control system 1, it can be expected that content useful for the majority of users is notified.

### Variations

The present invention can be carried out in different forms to the abovementioned embodiment. The present invention can, for example, also be carried out in the following forms. Also, the variations shown below may be combined as appropriate.

Control unit 11 of server apparatus 10 need not apply the same notification condition with regard to all content. For example, a configuration may be adopted in which control unit 11 relaxes the condition of cost with regard to content that includes information on events or sightseeing spots, but does not relax the condition of cost with regard to content that includes information on eateries.

The notification conditions may also include the conditions described below.

In the case where the content is route guidance or transfer guidance, relaxation of the notification condition may involve increasing the number of means of transportation that can be used, and restriction of the notification condition may involve reducing the number of means of transportation that can be used. Control unit 11, for example, performs transfer guidance or route guidance that does not include taxis in the daily sphere, and performs route guidance or transfer guidance including taxis in the non-daily sphere. In this case, the condition of the parameter that is included in the notification condition indicates the condition of the number of means of transportation.

Also, control unit 11 may relax or restrict the notification condition according to the state of the user, such as the physical condition or mood of the user, for example. For example, control unit 11 relaxes the notification condition, in the case where the user is in good physical condition or is feeling depressed, and restricts the notification condition, in the case where the user is not in good physical condition. In this case, the condition of the parameter that is included in the notification condition indicates the condition of the user's physical condition.

Note that control unit 11 may specify the physical condition of the user based on information input to communication terminal apparatus 20 by the user, or may specify the physical condition of the user based on information detected by a sensor mounted in communication terminal apparatus 20.

Control unit 11 may relax or restrict the notification condition according to the people that the user is with. Control unit 11 relaxes or restricts the notification condition based on the number of people that the user is with, for example. Control unit 11 takes content that includes information on eateries for a plurality of people such as restaurants as the target for notification in the case where the user is with other people, but does not take content that includes information on such eateries as the target for notification, in the case where the user is not with other people. Information on people that the user is with is specified by the user inputting information to communication terminal apparatus 20. In this case, the condition of the parameter that is included in the notification condition indicates the condition of the number of people that the user is with.

Also, control unit 11 may differentiate the content targeted for notification, by combining two or more aforementioned conditions of parameters.

Also, the notification condition may further include other conditions as long as the conditions change the content to be targeted for notification.

Also, the degree of relaxation or restriction of the notification condition may be divided into a plurality of levels. Control unit 11, in the case of relaxing the notification condition, for example, takes content associated with a parameter that satisfies a first condition as the target for notification, in the case where the situation in which the user is placed is a first situation, and takes content associated with a parameter that satisfies a second condition that differs from the first condition as the target for notification, in the case where the situation in which the user is placed is a second situation that differs from the first situation. This can also be similarly applied in the case of restricting the notification condition.

In this case, control unit 11 may differentiate the degree of relaxation or restriction of the notification condition, according to who the user is with (e.g., friends, family, business acquaintances), for example. For example, in the case of relaxing the notification condition, control unit 11 may take content that includes information on eateries whose cost is less than 3000 yen as the target for notification if the people who the user is with are friends, may take content that includes information on eateries whose cost is less than 4000 yen as the target for notification if the people who the user is with are family, and may take content that includes information on eateries whose cost is less than 5000 yen as the target for notification if the people who the user is with are business acquaintances.

Communication terminal apparatus 20 may realize some or all of the functions of server apparatus 10. For example, communication terminal apparatus 20 may realize at least some of the functions of the discrimination unit 112, speech recognition unit 113 and notification control unit 114. In this case, communication terminal apparatus 20 acquires the notification data of content, by making an inquiry to an external apparatus including content DB 13 connected to network 100.

Also, notification control system 1 need not be a system that supports spoken instructions, and, in this case, can omit the function of speech recognition unit 113.

The method of notifying content is not limited to a method utilizing a notification application, and may, for example, be a method utilizing e-mail, the Short Message Service or a social networking service.

Also, some of the configurations and operations described in the abovementioned embodiments may be omitted. Also, the order of processing described in the abovementioned embodiments may be changed as appropriate. Also, the specific contents (including respective numerical values) of the notification conditions described in the abovementioned embodiments are to be considered in all respects as illustrative.

The functions that are realized by control units 11 and 21 of the abovementioned embodiments may be realized through the combination of a plurality of computer programs or the cooperation of a plurality of hardware resources. In the case where the functions of control units 11 and 21 are realized using a computer program, this computer program may be provided in a state of being stored on a computer-readable recording medium such as a magnetic recording medium (magnetic tape, magnetic disk (HDD (Hard Disk Drive), FD (Flexible Disk), etc.), an optical recording medium (optical disc, etc.), a magneto-optical medium, a semiconductor memory or the like, or may be distributed via a network. The present invention can also be comprehended as a notification control method.

### Reference Signs List

- 1: Notification control system
- 10: Server apparatus
- 11: Control unit
- 111: Acquisition unit
- 112: Discrimination unit
- 113: Speech recognition unit
- 114: Notification control unit
- 12: Communication unit
- 13: Content DB
- 20: Communication terminal apparatus
- 21: Control unit
- 211: First acquisition unit
- 212: Acceptance unit
- 213: Transmission unit
- 214: Second acquisition unit
- 215: Notification unit
- 22: Communication unit
- 23: Touch screen unit
- 24: Positioning unit
- 25: Audio input/output unit
- 26: Storage unit

## Claims

1. A notification control system comprising:
a discrimination unit that discriminates a situation in which a user is placed; and
a notification control unit that notifies content satisfying a predetermined condition to the user, the notification control unit differentiating the condition between a case where it is discriminated that the user is placed in a specific situation and a case where the user is placed in another situation.

2. The notification control system according to claim 1,
wherein the notification control unit, in the case where it is discriminated that the user is placed in the specific situation, relaxes or restricts the condition to be more relaxed or restricted than in the case where the user is placed in the other situation.

3. The notification control system according to claim 1 or 2,
wherein the discrimination unit discriminates the situation, based on at least one of a position of the user and a date/time.

4. The notification control system according to claim 3,
wherein the discrimination unit discriminates whether the position of the user belongs to a daily sphere or a non-daily sphere.

5. The notification control system according to any one of claims 1 to 4,
wherein the condition includes a condition of a parameter associated with content, and
the notification control unit differentiates the condition of the parameter between the case where it is discriminated that the user is placed in the specific situation and the case where the user is placed in the other situation.

6. The notification control system according to claim 5,
wherein the parameter includes at least one of time, cost, position, calories, evaluation, and genre.

7. The notification control system according to any one of claims 1 to 6,
wherein the condition differs according to a type of content.

8. The notification control system according to claim 7,
wherein the notification control unit applies, to content of a specific type, a same condition in the case where it is discriminated that the user is placed in the specific situation and the case where the user is placed in the other situation.

9. A server apparatus comprising:
a discrimination unit that discriminates a situation in which a user of a communication terminal apparatus is placed; and
a notification control unit that notifies content satisfying a predetermined condition to the user of the communication terminal apparatus, the notification control unit differentiating the condition between a case where it is discriminated that the user is placed in a specific situation and a case where the user is placed in another situation.

10. A communication terminal apparatus comprising:
a transmission unit that transmits data indicating a situation in which a user of an own communication terminal apparatus is placed to a server apparatus;
an acquisition unit that acquires notification data, transmitted by the server apparatus in response to the transmitted data, that notifies content satisfying a predetermined condition, the condition differing between a case where it is discriminated that the user is placed in a specific situation and a case where the user is placed in another situation; and
a notification unit that notifies the content to the user, based on the acquired notification data.

11. A computer program that causes a computer of a communication terminal apparatus to execute the steps of:
transmitting data indicating a situation in which a user of the communication terminal apparatus is placed to a server apparatus;
acquiring notification data, transmitted by the server apparatus in response to the transmitted data, that notifies content satisfying a predetermined condition, the condition differing between a case where it is discriminated that the user is placed in a specific situation and a case where the user is placed in another situation; and
notifying the content to the user, based on the acquired notification data.

12. A notification control method comprising the steps of:
discriminating a situation in which a user is placed; and
notifying content that satisfies a predetermined condition to the user, the condition being differentiated between a case where it is discriminated that the user is placed in a specific situation and a case where the user is placed in another situation.
